# DEMANDE DE BREVET EUROPEEN

(11) **EP 4 112 183 A1**
(43) Date de publication de la demande: **04.01.2023**
(21) Numéro de dépôt: 22181619.2
(22) Date de dépôt: 28.06.2022
(51) Int. Cl.: B05B 12/00

(54) **SYSTÈME D'ANALYSE DE GOUTTES ET INSTALLATION DE REVÊTEMENT COMPRENANT UN TEL SYSTÈME**

(30) Priorité: 28.06.2021 FR 2106919
(71) Demandeur: Exel Industries, 51200 Epernay (FR)
(72) Inventeur: LE STRAT, Cédric, 51200 EPERNAY (FR); GUILLERMO PALACIO, Juan, 51200 EPERNAY (FR)
(74) Mandataire: Lavoix

(57) **Abrégé**

Un aspect de l'invention concerne un système d'analyse de gouttes (10) susceptibles d'être éjectées par un applicateur de produit de revêtement (20), ledit système comprenant :
- une source de lumière (11) configurée pour éclairer une zone d'éjection des gouttes, dite zone d'observation (30) ;
- un premier dispositif d'acquisition d'image (12a) configuré pour acquérir une image de la zone d'observation (30) ;
- un analyseur d'image (14) configuré pour, à partir de l'image de la zone d'observation (30), déterminer la présence des gouttes à une distance donnée de l'applicateur (20), la taille des gouttes et l'absence de satellite ;
la source de lumière (11) et le premier dispositif d'acquisition d'image (12a) étant situés d'un même côté de la zone d'observation (30).

## Description

### DOMAINE TECHNIQUE DE L'INVENTION

Le domaine technique de l'invention est celui du revêtement de surface suivant la technologie de la goutte à la demande (ou DOD, pour « Drop On Demand » en anglais). La présente invention concerne plus particulièrement un système d'analyse de gouttes éjectées par un applicateur de produit de revêtement et une installation de revêtement comprenant un applicateur et un système d'analyse de gouttes.

### ARRIERE-PLAN TECHNOLOGIQUE DE L'INVENTION

La technologie de la goutte à la demande (DOD) consiste à déposer sur une surface un produit de revêtement sous formes de gouttes, ce qui présente l'avantage de déposer uniquement la quantité de produit nécessaire au revêtement de la surface. Cette technologie peut notamment être utilisée pour peindre des motifs (tels que des bandes) sur des carrosseries de véhicule et ainsi personnaliser les véhicules, typiquement des voitures de sport.

Le brevet FR3087679B1 décrit une installation de revêtement fonctionnant suivant la technologie DOD. Cette installation comprend un convoyeur permettant de déplacer des carrosseries de véhicule, un robot multiaxes muni d'un bras mobile et un applicateur de produit de revêtement monté à une extrémité du bras mobile du robot. L'applicateur est une tête d'impression comprenant une rangée de buses à travers lesquelles s'écoule le produit de revêtement, typiquement de la peinture. Les buses sont configurées pour déposer la peinture goutte par goutte.

Il est utile d'observer et analyser les gouttes éjectées par les buses pour perfectionner l'applicateur, vérifier son bon fonctionnement avant et/ou après un cycle d'application ou encore élaborer les produits de revêtement.

Les systèmes d'observation et d'analyse de gouttes connus de l'état de la technique comprennent un dispositif d'éclairage et un dispositif d'acquisition d'image situé en face du dispositif d'éclairage. La tête d'impression est positionnée entre le dispositif d'acquisition d'image et le dispositif d'éclairage, de façon à observer les gouttes à contre-jour.

Le document US2019/308211A1 décrit par ailleurs une installation de revêtement comprenant une tête d'impression et un système d'observation de gouttes permettant de détecter le bouchage partiel ou total des buses de la tête d'impression. Le système d'observation comprend un capteur d'image orienté vers une zone d'éjection des buses et un dispositif d'éclairage situé dans le champ visuel du capteur d'image, du côté opposé de la zone d'éjection. Le capteur d'image acquiert une image des gouttes délivrées par les buses. L'image est ensuite analysée pour détecter des erreurs, telles que l'absence de gouttes due au bouchage d'une buse.

Les systèmes d'observation comme celui du document US2019/308211A1 sont difficiles à régler car la quantité de lumière perçue par le capteur d'image dépend du nombre de gouttes dans son champ visuel. Il est donc nécessaire d'ajuster régulièrement la puissance de l'éclairage ou la sensibilité du capteur d'image.

### RESUME DE L'INVENTION

On constate qu'il existe un besoin de prévoir un système d'observation et d'analyse de gouttes qui soit plus simple d'utilisation.

Selon un premier aspect de l'invention, on tend à satisfaire ce besoin en prévoyant un système d'analyse de gouttes susceptibles d'être éjectées par un applicateur de produit de revêtement, ledit système comprenant :
- une source de lumière configurée pour éclairer une zone d'éjection des gouttes, dite zone d'observation ;
- un premier dispositif d'acquisition d'image configuré pour acquérir une image de la zone d'observation ;
- un analyseur d'image configuré pour, à partir de l'image de la zone d'observation, déterminer la présence des gouttes à une distance donnée de l'applicateur, la taille des gouttes et l'absence de satellite ;
et dans lequel la source de lumière et le premier dispositif d'acquisition d'image sont situés d'un même côté de la zone d'observation.

En plaçant le premier dispositif d'acquisition d'image du même côté de la zone d'observation que la source de lumière (plutôt qu'à l'opposé), le risque d'éblouir le premier dispositif d'acquisition d'image est diminué. Il en résulte que le système d'analyse de gouttes selon l'invention est plus facile à utiliser (en particulier à régler) que les systèmes d'observation de gouttes de l'art antérieur fonctionnant selon le principe de l'ombroscopie.

En outre, grâce à cet agencement, la source de lumière et le premier dispositif d'acquisition d'image peuvent être plus facilement installés à l'extérieur d'une cabine de revêtement et n'ont donc pas besoin de respecter la réglementation relative aux atmosphères explosives (ATEX en Europe).

Dans un mode de réalisation préférentiel, le système d'analyse de gouttes comprend en outre un deuxième dispositif d'acquisition d'image configuré pour acquérir une image de la zone d'observation et disposé du même côté de la zone d'observation que la source de lumière et le premier dispositif d'acquisition d'image.

Selon un développement de ce mode de réalisation préférentiel, les premier et deuxième dispositifs d'acquisition d'image sont situés de part et d'autre de la source de lumière.

Outre les caractéristiques qui viennent d'être évoquées dans les paragraphes précédents, le système d'analyse de gouttes selon le premier aspect de l'invention peut présenter une ou plusieurs caractéristiques complémentaires parmi les suivantes, considérées individuellement ou selon toutes les combinaisons techniquement possibles :
- la source de lumière présente un axe de propagation de la lumière ;
- le premier dispositif d'acquisition d'image présente un premier axe optique situé dans un même plan que l'axe de propagation de la lumière ;
- le premier axe optique forme avec l'axe de propagation de la lumière un angle supérieur ou égal à 0° et inférieur ou égal à 45° ;
- le deuxième dispositif d'acquisition d'image présente un deuxième axe optique situé dans un même plan que l'axe de propagation de la lumière ;
- le deuxième axe optique forme avec l'axe de propagation de la lumière un angle supérieur ou égal à 0° et inférieur ou égal à 45° ; cela permet d'obtenir une image en 3 dimensions, dans le même champ de vision, ce qui permet d'augmenter la précision de l'observation ;
- le système comprend en outre un fond situé à l'opposé de la source de lumière par rapport à la zone d'observation, le fond comprenant une première partie présentant une première teinte, de préférence sombre, par exemple noire, et une deuxième partie présentant une deuxième teinte, de préférence claire, par exemple blanche, la première teinte étant plus sombre que la deuxième teinte ; cela permet d'améliorer l'observation de différentes teintes sans avoir besoin de changer de fond en fonction de la teinte observée, grâce à un contraste entre le fond et le produit de revêtement observé, par exemple de la peinture ;
- le système comprend un fond situé à l'opposé de la source de lumière par rapport à la zone d'observation et la source de lumière est configurée pour éclairer le fond d'une couleur complémentaire à celle des gouttes à analyser ; cela permet de maximiser le contraste entre le fond et la teinte de peinture observée, ce qui améliore la précision de l'observation ;
- le fond est fixe par rapport à la source de lumière et au premier dispositif d'acquisition d'image ; c'est une architecture simple et aisée à mettre en œuvre, évitant en outre de devoir se conformer aux contraintes liées aux normes des atmosphères explosives ;
- le fond est monté mobile par rapport à la source de lumière et au premier dispositif d'acquisition d'image ; cela permet de déplacer le fond plutôt que de devoir déplacer la tête d'impression pour pouvoir réaliser une observation, et également d'obtenir un champ de vision plus important pour les observations ;
- le fond est un disque monté en rotation par rapport à la source de lumière et au premier dispositif d'acquisition d'image ;
- le fond présente une forme rectangulaire et est monté en translation par rapport à la source de lumière et au premier dispositif d'acquisition d'image ;
- le premier dispositif d'acquisition d'image est configuré pour acquérir des images de la zone d'observation à une fréquence d'acquisition inférieure ou égale à la fréquence d'éjection des gouttes divisée par deux, et de préférence à une fréquence d'acquisition inférieure ou égale à la fréquence d'éjection des gouttes divisée par cinq ; cela permet de limiter les contraintes de performances du dispositif d'acquisition d'image, et d'accroître la compatibilité entre l'invention et les dispositifs d'acquisition d'image ;
- le premier dispositif d'acquisition d'image est commandé par un circuit de commande de l'éjection des gouttes ; c'est un système de commande plus simple à mettre en œuvre, qui permet de se passer d'un système de commande dédié à l'acquisition d'image ;
- le deuxième dispositif d'acquisition d'image est configuré pour acquérir des images de la zone d'observation à une fréquence d'acquisition inférieure ou égale à la fréquence d'éjection des gouttes divisée par deux, et de préférence à une fréquence d'acquisition inférieure ou égale à la fréquence d'éjection des gouttes divisée par cinq ;
- le deuxième dispositif d'acquisition d'image est commandé par le circuit de commande de l'éjection des gouttes ;
- le premier dispositif d'acquisition d'image comprend un capteur d'image noir et blanc ou un capteur d'image couleur ; un capteur noir et blanc offre une meilleure sensibilité, et serait notamment sensible à la variation de contraste offerte par l'éclairage du fond avec une teinte complémentaire à la teinte de la peinture observée ;
- le deuxième dispositif d'acquisition d'image comprend un capteur d'image noir et blanc ou un capteur d'image couleur ;
- la source de lumière est un stroboscope ;
- le stroboscope est commandé par un circuit de commande de l'éjection des gouttes ;
- la fréquence du stroboscope est égale à n fois la fréquence d'acquisition, avec *n* un entier naturel supérieur ou égal à 2, de préférence supérieur ou égal à 5 ;
- la fréquence du stroboscope est inférieure ou égale à la fréquence d'éjection de gouttes ; cela permet de limiter les besoins de réglage du dispositif optique, même lorsque la fréquence d'éjection des gouttes augmente, en limitant l'activation de l'éclairage lorsque la fréquence d'éjection augmente, ce qui permet d'éviter d'éblouir le capteur optique ;
- la source de lumière comprend au moins une LED sur circuit imprimé (Chip On Board ou COB) ; c'est un dispositif simple d'utilisation, qui offre une puissance d'éclairage importante ;
- la source de lumière comprend plusieurs LED capables d'émettre des rayonnements de longueurs d'onde différentes ; et
- l'analyseur d'image est en outre configuré pour, à partir de l'image de la zone d'observation, déterminer une ou plusieurs caractéristiques choisies parmi les suivantes : la direction des gouttes, la forme des gouttes, le point de création des gouttes et la vitesse des gouttes.

Un deuxième aspect de l'invention concerne une installation de revêtement comprenant :
- un robot multiaxes comprenant un bras mobile ;
- un applicateur de produit de revêtement monté à une extrémité du bras mobile et comprenant au moins une buse d'éjection de gouttes ; et
- un système d'analyse de gouttes selon le premier aspect de l'invention.

Dans un premier mode de réalisation, l'installation de revêtement comprend en outre :
- une cabine dans laquelle est disposé le robot multiaxes ;
- au moins une paroi vitrée ;
la source de lumière et le premier dispositif d'acquisition d'image étant disposés à l'extérieur de la cabine et séparés de la zone d'observation par ladite au moins une paroi vitrée.

Selon un développement de ce premier mode de réalisation, ladite au moins une paroi vitrée appartient à la cabine.

Selon un autre développement, le système d'analyse de gouttes comprend un boîtier, ladite au moins une paroi vitrée appartient au boîtier et le boîtier est disposé dans un ouverture aménagée dans une paroi latérale de la cabine.

Dans un deuxième mode de réalisation, l'installation de revêtement comprend en outre :
- une cabine dans laquelle est disposé le robot multiaxes ;
- un caisson disposé à l'intérieur de la cabine et muni d'au moins une paroi vitrée ;
la source de lumière et le premier dispositif d'acquisition d'image étant disposés à l'intérieur du caisson et séparés de la zone d'observation par ladite au moins une paroi vitrée.

Selon un développement de ce deuxième mode de réalisation, l'installation de revêtement comprend en outre des moyens de pressurisation du caisson.

Outre les caractéristiques qui viennent d'être évoquées dans les paragraphes précédents, l'installation de revêtement selon le deuxième aspect de l'invention peut présenter une ou plusieurs caractéristiques complémentaires parmi les suivantes, considérées individuellement ou selon toutes les combinaisons techniquement possibles :
- l'installation de revêtement comprend une unique paroi vitrée orientée perpendiculairement à un axe de propagation de la lumière de la source de lumière ;
- l'installation de revêtement comprend une première paroi vitrée orientée perpendiculairement à un axe de propagation de la lumière de la source de lumière et une deuxième paroi vitrée orientée perpendiculairement à un axe optique du premier dispositif d'acquisition d'image ;
- le système d'analyse de gouttes comprend en outre un troisième dispositif d'acquisition d'image orienté vers une face de l'applicateur dans laquelle est aménagée ladite au moins une buse d'éjection de gouttes ;
- le troisième dispositif d'acquisition d'image comprend un capteur d'image noir et blanc ou un capteur d'image couleur ; et
- l'applicateur est une tête d'impression de type goutte à la demande (DOD).

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
la figure 1 représente un mode de réalisation préférentiel d'un système d'analyse de gouttes selon le premier aspect de l'invention ;
la figure 2 représente plusieurs configurations d'un fond ou écran appartenant au système d'analyse de gouttes de la figure 1 ;
la figure 3 illustre le principe d'une technique d'analyse d'image susceptible d'être mise en œuvre par le système d'analyse de gouttes de la figure 1 ;
la figure 4 représente un premier mode de réalisation d'une installation de revêtement selon le deuxième aspect de l'invention ;
la figure 5 représente un deuxième mode de réalisation d'une installation de revêtement selon le deuxième aspect de l'invention ; et
la figure 6 représente un autre mode de réalisation d'une installation de revêtement.

Pour plus de clarté, les éléments identiques ou similaires sont repérés par des signes de référence identiques sur l'ensemble des figures.

### DESCRIPTION DETAILLEE

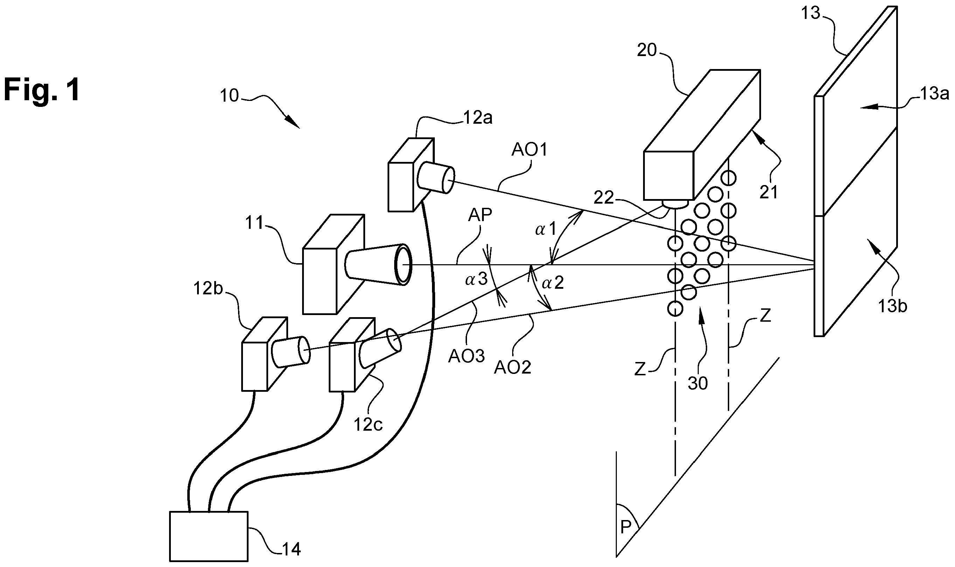

La figure 1 est une vue schématique en perspective d'un système d'analyse de gouttes 10 selon un mode de réalisation préférentiel.

Le système d'analyse 10 est ici représenté en situation de fonctionnement, en présence d'un applicateur 20 de produit de revêtement. L'applicateur 20 comprend une face d'éjection 21 et au moins une buse d'éjection de gouttes 22 aménagée dans la face d'éjection 21. De préférence, l'applicateur 20 comprend une ou plusieurs rangées de buses d'éjection de gouttes 22. Le nombre de buses 22 dans chaque rangée peut être compris entre 10 et 100.

L'applicateur 20 est de préférence une tête d'impression fonctionnant selon la technologie de la goutte à la demande (ou DOD, pour « Drop On Demand » en anglais). Chaque buse 22 est configurée pour déposer le produit de revêtement goutte par goutte. Le produit de revêtement pris en exemple ci-après est de la peinture, mais il peut également s'agir d'un apprêt, d'un vernis ou d'un produit plus visqueux comme une colle ou un mastic.

Le système d'analyse 10 comprend une source de lumière 11 configurée pour éclairer une zone d'éjection des gouttes 30 et un premier dispositif d'acquisition d'image 12a configuré pour acquérir au moins une image de la zone d'éjection des gouttes 30. Plus particulièrement, le premier dispositif d'acquisition d'image 12a est orienté vers la zone d'éjection des gouttes 30, appelée ci-après zone d'observation (ou zone d'analyse). La zone d'observation 30 est une zone au-dessus de laquelle l'applicateur 20 vient se positionner lorsqu'on souhaite effectuer une analyse des gouttes.

La source de lumière 11 et le premier dispositif d'acquisition d'image 12a sont disposés d'un même côté de la zone d'observation 30. Autrement dit, la source de lumière 11 et le premier dispositif d'acquisition d'image 12a sont agencés pour respectivement éclairer la zone d'observation 30 et acquérir une image de la zone d'observation 30 (sensiblement) dans la même direction, et pas dans des directions opposées.

La source de lumière 11 est de préférence un projecteur (c.-à-d. une source de lumière directionnelle) orienté vers la zone d'observation 30. Elle présente un axe optique AP qui traverse la zone d'observation 30. L'axe optique AP de la source de lumière 11, appelé ci-après axe de propagation de la lumière, est défini comme l'axe de symétrie du faisceau de rayons lumineux émis par la source de lumière 11. L'axe de propagation de la lumière AP est avantageusement perpendiculaire à un premier plan P contenant les axes d'éjection z des buses 22 appartenant à une même rangée. Il est alors perpendiculaire au « rideau » de gouttes éjectées par les buses 21 (en fonctionnement normal). Les axes d'éjection z des buses 21 sont de préférence orientés perpendiculairement à la face d'éjection 22 de l'applicateur 20.

Le premier dispositif d'acquisition d'image 12a comprend un premier capteur d'image et un premier objectif à focale variable (zoom) ou fixe. Le dispositif d'acquisition d'image 12a est par exemple un appareil photographique ou une caméra vidéo.

Le premier dispositif d'acquisition d'image 12a présente un axe optique AO1 qui traverse la zone d'observation 30. L'axe optique AO1 du premier dispositif d'acquisition d'image 12a et l'axe de propagation de la lumière AP sont avantageusement situés dans un deuxième plan. Ce deuxième plan est de préférence perpendiculaire au premier plan P et parallèle à la face d'éjection 21. L'axe optique AO1 du premier dispositif d'acquisition d'image 12a est défini comme l'axe du premier capteur d'image (il passe par le centre d'une matrice de pixels appartenant au premier capteur d'image). Il forme avec l'axe de propagation de la lumière AP un angle α1 supérieur ou égal à 0° et inférieur ou égal à 45°, et de préférence compris entre 0° et 20° (bornes incluses). Ainsi, l'axe optique AO1 du premier dispositif d'acquisition d'image 12a peut être parallèle à l'axe de propagation de la lumière AP.

Dans le mode de réalisation préférentiel de la figure 1, le système d'analyse 10 comprend en outre un deuxième dispositif d'acquisition d'image 12b orienté vers la zone d'observation 30 et disposé du même côté de la zone d'observation 30 que la source de lumière 11 et le premier dispositif d'acquisition d'image 12a. Ce deuxième dispositif d'acquisition d'image 12b permet de déterminer la direction des gouttes et plus particulièrement de détecter une déviation par rapport à l'axe d'éjection z des buses 22. Une telle déviation ne peut être détectée par le premier dispositif d'acquisition d'image 12a seul lorsque la direction des gouttes éjectées par une buse 22 reste dans un plan contenant l'axe optique AO1 et l'axe d'éjection z de cette buse 22.

Le deuxième dispositif d'acquisition d'image 12b est de préférence identique au premier dispositif d'acquisition d'image 12a. Il comprend un deuxième capteur d'image et un deuxième objectif à focale variable ou fixe. Le deuxième d'acquisition d'image 12a est par exemple un appareil photographique ou une caméra vidéo.

Dans un souci de simplification, on utilisera ci-après le terme de « caméra » pour désigner un dispositif d'acquisition d'image.

La deuxième caméra 12b présente un axe optique AO2 qui traverse la zone d'observation 30. L'axe optique AO2 de la deuxième caméra 12b forme avec l'axe de propagation de la lumière AP un angle a2 supérieur ou égal à 0° et inférieur ou égal à 45°, et de préférence compris entre 0° et 20° (bornes incluses). Il est avantageusement situé dans le même (deuxième) plan que l'axe de propagation de la lumière AP et l'axe optique AO1 de la première caméra 12a. En revanche, il ne s'étend pas parallèlement à l'axe optique AO1 de la première caméra 12a.

Les première et deuxième caméras 12a-12b sont avantageusement situées de part et d'autre de la source de lumière 11. Une telle disposition facilite la détermination des caractéristiques des gouttes, en particulier leur position et leur taille. Dans une variante, on peut équiper une ou plusieurs caméras 12 d'une pluralité de sources de lumière 11, par exemple une pluralité de LED formant un cercle autour de l'objectif.

Le premier capteur d'image et le deuxième capteur d'image sont avantageusement des capteurs d'image noir et blanc (monochrome) ou des capteurs d'image couleur. Les capteurs d'image noir et blanc fournissent des images avec un meilleur contraste. Un avantage des capteurs d'image couleur est d'identifier un éventuel problème de rinçage des buses 22. Un inconvénient est que leur sensibilité est deux à trois fois inférieure à celle des capteurs noir et blanc. Une solution pour réduire cet écart de sensibilité est de retirer le filtre infrarouge qui équipe généralement les capteurs d'image couleur. Le rayonnement infrarouge capté augmente la sensibilité, mais l'image de la zone d'observation devient alors rosée. Ainsi, les premier et deuxième capteurs d'image (couleur ou monochrome) peuvent être équipés ou dépourvus de filtre infrarouge.

La première caméra 12a est de préférence configurée pour acquérir des images de la zone d'observation 30 à une fréquence d'acquisition fₐ inférieure ou égale à la fréquence d'éjection des gouttes f_{g} divisée par deux, et de préférence à une fréquence d'acquisition fₐ inférieure ou égale à la fréquence d'éjection des gouttes f_{g} divisée par cinq. On a donc une période d'acquisition qui comprend trois durées : une durée avant ouverture de l'obturateur, une durée d'acquisition tₐ et une durée après fermeture de l'obturateur. De préférence, la durée d'acquisition tₐ est supérieure à une période d'éjection de goutte. Ainsi, chaque image de la zone d'observation 30 contient de façon certaine au moins une goutte éjectée par chaque buse (activée) située dans le champ visuel de la première caméra.

La fréquence d'acquisition fₐ est avantageusement comprise entre 10 Hz et 30 Hz (soit entre 10 et 30 images par seconde), tandis que la fréquence d'éjection des gouttes f_{g} est typiquement comprise entre 20 Hz et 3000 Hz (dépendant des vitesses de déplacement de l'applicateur 20 et de la résolution souhaitée). En d'autres termes, il n'est pas nécessaire d'utiliser une caméra à haute vitesse pour observer convenablement les gouttes et déterminer leur caractéristiques. Ceci a pour effet de limiter le coût du système d'analyse 10.

La prise de vue par la première caméra 12a peut être déclenchée au moyen d'un signal envoyé par un circuit de commande (« driver ») de l'applicateur 20, ce circuit de commande étant chargé de commander l'éjection des gouttes.

La deuxième caméra 12b est synchronisée avec la première caméra 12a, par exemple grâce au même signal envoyé par le circuit de commande. Autrement dit, les prises de vue des caméras 12a-12b se déclenchent au même moment. La fréquence d'acquisition de la deuxième caméra 12a est avantageusement la même que celle de la première caméra 12a.

La source de lumière 11 est de préférence un stroboscope. L'utilisation d'un stroboscope permet d'obtenir des images nettes des gouttes alors que celles-ci sont en mouvement. Chaque flash de lumière produit par le stroboscope peut être déphasé par rapport à l'éjection d'une goutte d'une valeur paramétrable (à partir du signal envoyé par le circuit de commande de l'applicateur 20), afin de capter l'image de cette goutte à une distance attendue de l'applicateur 20. La fréquence fₛ du stroboscope est avantageusement égale à n fois la fréquence d'acquisition fₐ, avec *n* un entier naturel supérieur ou égal à 2, de préférence supérieur ou égal à 5. Ainsi, la zone d'observation 30 reçoit au moins deux flashs de lumière pendant le temps d'exposition de la première caméra 12a (et de la deuxième caméra 12b, dans le mode de réalisation préférentiel). Il en découle que chaque image représente plusieurs vues superposées de la zone d'observation 30 et peut contenir plusieurs fois la même goutte, mais à des positions différentes ou plusieurs gouttes différentes au même endroit et/ou la combinaison des deux. En revanche, il n'est pas nécessaire de prendre une image de toutes les gouttes éjectées par une buse. En effet, le risque est alors d'avoir trop de gouttes partiellement ou totalement superposées sur une image ce qui pourrait fausser la mesure de la taille de la goutte unitaire. La fréquence fₛ du stroboscope peut donc être inférieure ou égale à la fréquence d'éjection de gouttes f_{g}.

A titre d'exemple, si la fréquence d'acquisition d'image fₐ est de 25 Hz et que la fréquence d'éjection des gouttes f_{g} est de 1000 Hz, alors la fréquence du stroboscope fₛ peut être comprise entre 50 Hz et 1000 Hz. Typiquement, on choisira une fréquence du stroboscope fₛ égale à 5 fois la fréquence d'acquisition, soit 125 Hz.

Comme indiqué précédemment, la source de lumière 11, la première caméra 12a et (le cas échéant) la deuxième caméra 12b sont situées du même côté de la zone d'observation 30. L'éclairage des gouttes s'effectue donc dans le même sens que l'observation, contrairement aux systèmes d'observation de l'art antérieur. Cette disposition simplifie l'utilisation du système d'analyse 10, en particulier la phase de réglage, car la quantité de lumière perçue par chaque caméra varie très peu en fonction du nombre de gouttes présentes dans son champ visuel. Il est ainsi possible d'observer plus d'une centaine de gouttes sans devoir régler la puissance de la source de lumière 11 ou la sensibilité du capteur d'image.

Ceci est d'autant plus avantageux que la fréquence fₛ du stroboscope est importante. Par exemple, si la fréquence d'acquisition des capteurs d'image est de 25 Hz et que la fréquence fₛ du stroboscope est de 100 Hz, alors chaque image reçoit 4 flashs de lumière. Des capteurs d'image placés en face du stroboscope (c.-à-d. sous un éclairage direct) risquent donc d'être très rapidement éblouis.

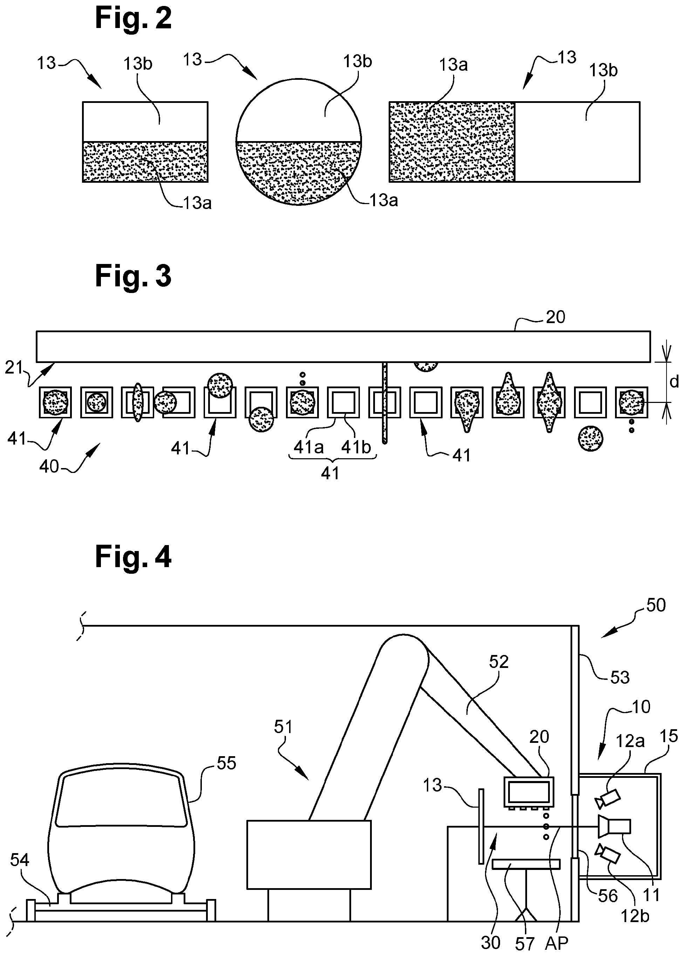

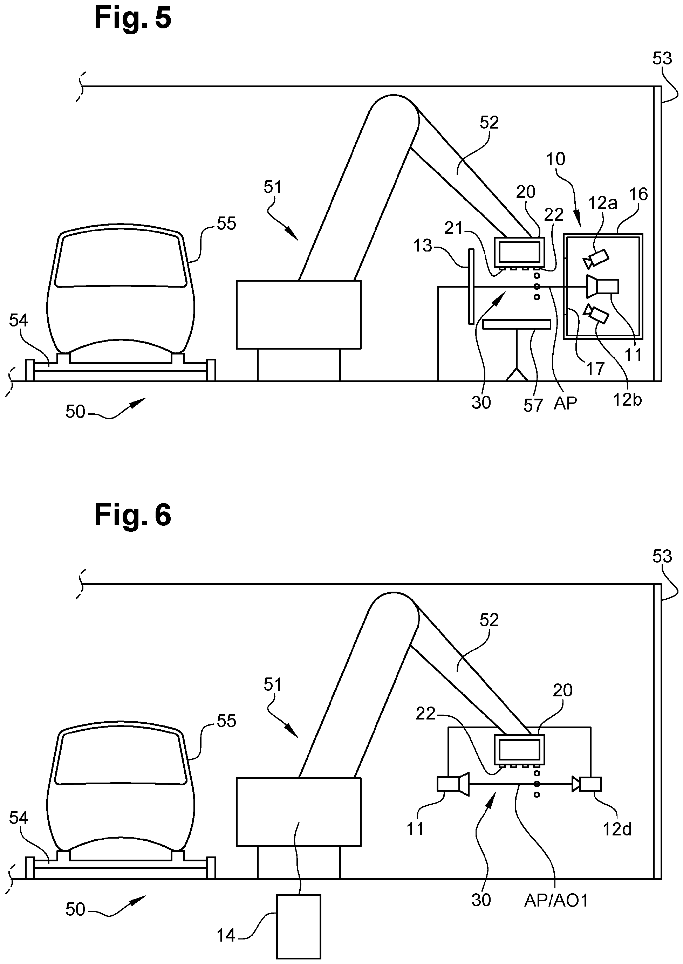

Le regroupement de la source de lumière 11 et des caméras 12a-12b facilite en outre la perception des teintes de la peinture et rend possible, comme il sera décrit ultérieurement en référence aux figures 4 et 5, l'installation du système d'analyse 10 en dehors d'une cabine de revêtement de peinture.

La source de lumière 11 est de préférence une lampe à LED. Une lampe à LED est capable de générer des impulsions de lumière très brèves et remplace avantageusement une lampe à décharge. La source de lumière 11 peut comprendre au moins une LED sur circuit imprimé, aussi appelée LED COB (pour « Chip On Board » en anglais), autrement dit un assemblage de plusieurs LED élémentaires sur une même substrat. Ce type de LED est avantageux car il permet de concentrer l'intensité lumineuse sans que la puissance dissipée ne soit véhiculée par la lumière. Cela évite que la zone d'observation, qui peut être une zone à atmosphère explosive, soit chauffée par la lumière.

La source de lumière 11 peut également comprendre plusieurs LED capables d'émettre des rayonnements de longueurs d'onde différentes, dans le domaine visible et infrarouge. Typiquement, une LED bleu, une LED rouge et une LED verte permette de reproduire tout le spectre visible. Ces différentes LED peuvent être plusieurs LED COB, plusieurs LED élémentaires au sein d'une même LED COB, voire plusieurs LED d'un autre type.

En faisant varier la longueur d'onde du rayonnement électromagnétique émis par la source de lumière 11, par exemple en fonction de la teinte de la peinture, il est possible d'améliorer le contraste des images et faciliter leur interprétation.

La production de flashs de couleurs différentes permet en outre de différentier les positions d'une même goutte sur une même image (par des couleurs différentes) et par conséquent de déterminer plus facilement la vitesse de déplacement des gouttes.

Alternativement, une unique LED COB jaune ou blanche (sans possibilité de réglage du mélange de longueurs d'onde) pourra être privilégiée pour produire un éclairage jaune ou blanc.

Toujours en référence à la figure 1, le système d'analyse 10 peut comprendre un troisième dispositif d'acquisition d'image 12c orienté vers la face d'éjection 21 de l'applicateur 20. Ce troisième dispositif d'acquisition d'image 12c peut être du même type que les premier et deuxième dispositifs d'acquisition d'image 12a-12b. En particulier, il comprend un troisième capteur d'image, de préférence un capteur d'image noir et blanc ou un capteur d'image couleur. A l'instar du premier capteur d'image et/ou du deuxième capteur d'image, le troisième capteur peut être équipé ou dépourvu de filtre infrarouge.

Cette troisième caméra 12c, d'axe optique AO3, permet de vérifier que la face d'éjection 21 de l'applicateur 20 est exempte de saletés (poussière, résidus de peinture...), de détecter d'éventuelles fuites et d'observer les ménisques de peinture qui se forment au niveau des buses 22. La troisième caméra 12c est par exemple située entre les première et deuxième caméras 12a-12b à la verticale de la source de lumière 11.

L'axe optique AO3 de la troisième caméra 12c et l'axe de propagation de la lumière AP sont avantageusement situés dans un même troisième plan. L'axe optique AO3 forme avec l'axe de propagation de la lumière AP un angle a3 strictement supérieur à 0° et inférieur ou égal à 60°, et de préférence compris entre 20° et 40° (bornes incluses).

Le système d'analyse 10 peut également comprendre un fond 13 (ou écran) situé à l'opposé de la source de lumière 11 par rapport à la zone d'observation 30. Le fond 13 comprend une première partie 13a d'une première teinte et une deuxième partie 13b d'une deuxième teinte, la première teinte étant plus sombre que la deuxième teinte. Dit autrement, le fond 13 comprend avantageusement une première partie sombre 13a, par exemple noire, et une deuxième partie claire 13b, par exemple blanche. L'analyse des gouttes est accomplie devant la partie du fond 13 qui procure le meilleur contraste d'image, selon la teinte de la peinture utilisée. Plus particulièrement, la première partie sombre 13a est utilisé pour les teintes de peinture claires et la deuxième partie claire 13b est utilisée pour les teintes de peinture foncées. Pour faciliter l'analyse des images, le fond 13 peut également comprendre dans chaque zone une échelle graduée horizontale ou verticale, un quadrillage ou simplement des lignes horizontales ou verticales (non représentés sur la figure 1).

Toujours dans le but d'améliorer le contraste, le fond 13 peut être éclairé d'une couleur complémentaire à celle des gouttes à analyser (gouttes de peinture par exemple). La source de lumière 11 peut être configurée pour éclairer le fond 13 de cette couleur complémentaire. Alternativement, le système d'analyse 10 peut comprendre un dispositif d'éclairage additionnel (distinct de la source de lumière 11).

Le fond 13 peut être fixe ou mobile par rapport à la source de lumière 11 et aux caméras 12a-12c. Le fond 13 est de préférence monté mobile en translation (par exemple au moyen d'une glissière ou d'un vérin) ou en rotation (par exemple au moyen d'un moteur ou d'un vérin rotatif).

La figure 2 représente plusieurs configurations possibles du fond 13. Dans une première configuration illustrée à gauche de la figure 2 (et sur la figure 1), le fond 13 présente une forme rectangulaire. La première partie sombre 13a constitue une partie inférieure du fond 13, tandis que la deuxième partie claire 13b constitue une partie supérieure du fond 13. Ce fond rectangulaire est avantageusement monté en translation (verticalement) par rapport à la source de lumière 11 et aux caméras 12a-12c.

Dans une deuxième configuration illustrée à droite de la figure 2, le fond 13 présente également une forme rectangulaire. La première partie sombre 13a constitue une partie gauche, tandis que la deuxième partie claire 13b constitue une partie droite (dans le sens d'observation des caméras 12a-12b). Ce fond rectangulaire est avantageusement monté en translation (latéralement) par rapport à la source de lumière 11 et aux caméras 12a-12c.

Dans chacune de ces deux configurations, les première et deuxième parties 13a-13b du fond 13 peuvent être inversées.

Dans une troisième configuration illustrée au centre de la figure 2, le fond 13 est un disque. La première partie sombre 13a constitue une première moitié du disque, tandis que la deuxième partie claire 13b constitue une deuxième moitié du disque. Ce fond 13 en forme de disque est avantageusement monté en rotation par rapport à la source de lumière 11 et aux caméras 12a-12c.

Enfin, le système d'analyse 10 comprend un analyseur d'image 14 (cf. Fig.1) configuré pour, à partir d'une image de la zone d'observation 30, déterminer la présence des gouttes à une distance donnée de l'applicateur 20, la taille des gouttes et l'absence de satellite. La présence des gouttes à une distance donnée de l'applicateur 20 permet de vérifier (en première approximation) si les gouttes sont éjectées au bon moment, à la bonne vitesse et dans la bonne direction. La taille des gouttes permet de calculer la quantité de peinture déposée, de déterminer une usure de la tête d'impression ou de déterminer une dérive des pressions d'alimentions ou des propriétés viscoélastiques du produit de revêtement (si la goutte mesurée est plus grosse qu'attendu). Enfin, les satellites sont des gouttes secondaires de plus petite taille qui peuvent accompagner la goutte (principale) souhaitée et être à l'origine de défauts d'impression (tels que des bavures) sur le support à peindre. Ces satellites sont par conséquent à éviter.

L'analyseur d'image 14 comprend des moyens logiciels d'analyse d'image pouvant être exécuté par un ordinateur ou un calculateur (ex. processeur) appartenant à une carte électronique. Les images acquises par la (les) caméra(s) et les résultats de l'analyse sont avantageusement stockés dans une mémoire qui peut être interne ou externe à l'ordinateur ou la carte électronique. L'ordinateur peut être équipé d'un écran pour visualiser les images et les résultats de l'analyse.

La figure 3 représente schématiquement une technique d'analyse d'image qui peut être mise en œuvre par l'analyseur d'image 14 pour déterminer la présence des gouttes, la taille des gouttes et l'absence de satellite.

Cette technique comprend la superposition d'un calque numérique 40 sur l'image à analyser. Le calque numérique 40 comprend une ou plusieurs enveloppes 41 dont les dimensions sont définies en fonction de la taille attendue des gouttes. De préférence, le calque numérique 40 comprend autant d'enveloppes 41 qu'il y a de buses 22 dans une rangée. Ainsi, à chaque goutte éjectée correspond une enveloppe 41. Les enveloppes 41 ont par exemple une forme carrée ou ronde. Elles peuvent être alignées, comme cela est représenté sur la figure 3, bien que cela ne soit pas obligatoire.

Chaque enveloppe 41 peut comprendre une zone de tolérance délimitée par une première fenêtre 41a correspondant à une taille maximale des gouttes et une deuxième fenêtre 41b correspondant à une taille minimale des gouttes.

Le calque numérique 40 est superposé à l'image à analyser de sorte que chaque enveloppe 41 soit positionnée à une distance d donnée de l'image de l'applicateur 20. La distance d associée à chaque enveloppe 41 est mesurée entre la face d'éjection 21 de l'applicateur 20 et le centre de l'enveloppe 41. Elle est fonction de l'endroit où la goutte devrait normalement se trouver au moment de la prise de vue. La distance d est par exemple égale à la distance qui sépare la face d'éjection 21 de l'applicateur 20 et le support à revêtir lors de l'application de peinture. Cette dernière distance est appelée ci-après « distance d'application ».

Si une goutte n'est pas entièrement contenue dans l'enveloppe 41 correspondante et/ou que sa périphérie ne se situe pas majoritairement dans la zone de tolérance, alors il peut être considéré que la goutte n'est pas présente à la distance souhaitée au moment de la prise de vue et/ou que sa taille n'est pas adéquate. La détection de pixels (représentant de la peinture) situés en dehors de l'enveloppe 41 et distincts de ceux contenus dans l'enveloppe 41 signifie qu'un ou plusieurs satellites sont présents.

Dans l'exemple de la figure 3, seule la goutte la plus à gauche est considérée comme bonne, car elle se situe à l'emplacement voulue (distance d), elle présente une taille adéquate (dans les limites de l'enveloppe 41) et elle est dépourvue de satellite. A l'inverse, la deuxième goutte en partant de la gauche est trop petite et la dernière goutte (la plus à droite) est accompagnée de satellites.

Le calque numérique 40 peut être généré manuellement, semi-automatiquement ou de manière complétement automatique. En mode manuel, l'utilisateur du système d'analyse 10 définit entièrement les enveloppes 41 (forme, taille et position). En mode semi-automatique, l'analyseur d'image 14 génère des enveloppes 41 à partir d'une image de référence contenant une goutte et propose à l'utilisateur de les corriger avant de les valider. En mode automatique, l'analyseur d'image 14 génère des enveloppes à partir de plusieurs images de référence (typiquement plus de 100). L'utilisateur peut paramétrer une validation automatique ou manuelle et garde la possibilité de modifier à tout moment les enveloppes 41 générées par l'analyseur d'image 14.

L'analyseur d'image 14 peut en outre être configuré pour déterminer la forme des gouttes à une distance donnée (distance d).

Dans un mode de fonctionnement dit « expert » de l'analyseur d'image 14, les gouttes sont analysées sur tout ou partie de la distance qu'elles devront parcourir pendant l'application. Les caméras 12a-12b fournissent un film à partir duquel peut être déterminé :
- la direction des gouttes ;
- la forme des gouttes (en plusieurs points de la course) ;
- le barycentre des gouttes ;
- le point de création des gouttes, c'est-à-dire le point où le jet de peinture appelé communément « filament » se rompt pour former une goutte ;
- la vitesse de gouttes ; et
- le temps que mettent les gouttes pour parcourir la distance d'application prévue.

Dans ce mode expert, il est donc possible d'évaluer l'évolution d'une goutte pendant toute la durée de son parcours (cette évaluation étant faite à partir de prises de vues de plusieurs gouttes différentes éjectées par la même buse).

Le contrôle des gouttes peut être réalisé avec des compositions de peinture différentes et des paramètres d'éjection différents. Ces paramètres d'éjection sont par exemple la fréquence d'éjection, la forme d'onde (qui décrit le mouvement de l'actionneur de la buse en fonction du temps : courbe de montée, temps resté ouvert, courbe de de fermeture), la force d'éjection et la pression à laquelle la peinture est alimentée dans les buses. Un ensemble de paramètres est défini pour chacun des modes de fonctionnement de l'applicateur 20. Un calque numérique 40 peut alors être créé pour chaque couple composition de peinture - ensemble de paramètres d'éjection.

Outre les caractéristiques des gouttes, l'analyseur d'image 14 peut déterminer l'état de propreté de la face d'éjection 21 de l'applicateur 20. Pour ce faire, une image fournie par la troisième caméra 12c peut être comparée avec une image de référence, prise avant la première utilisation de l'applicateur (ou lorsque la plaque d'éjection est considérée comme propre) et mémorisée dans la mémoire de l'ordinateur. A partir de l'image fournie par la troisième caméra 12c, l'analyseur d'image 14 peut déterminer en outre la forme des ménisques au niveau des buses pendant et après l'éjection.

D'autres techniques d'analyse d'image, connues de l'homme du métier, peuvent être mises en œuvre par l'analyseur d'image 14.

Le système d'analyse 10 décrit ci-dessus peut être utilisé lors de la mise au point des applicateurs et/ou de l'élaboration des produits de revêtement. Il peut également faire partie d'une installation de revêtement de peinture (ou autre produit de revêtement), afin d'analyser les gouttes en production, typiquement avant de démarrer un cycle d'application de peinture. Ainsi, un autre aspect de l'invention concerne une installation de revêtement.

Les figues 4 et 5 représentent des premier et deuxième modes de réalisation d'une installation de revêtement 50. L'installation de revêtement 50 comprend, outre le système d'analyse 10 et l'applicateur 20, un robot multiaxes 51. Le robot multiaxes 51 est muni d'un bras mobile 52, à l'extrémité duquel est monté l'applicateur 20.

L'installation de revêtement 50 peut également comprendre une cabine 53 dans laquelle est disposé le robot multiaxes 51. L'intérieur de la cabine 53 peut constituer une zone à atmosphère explosive. En effet, les produits de revêtement (tels que la peinture) peuvent rejeter lors de leur application des gaz inflammables, en raison notamment de la présence de solvant dans la composition de ces produits de revêtement.

L'installation de revêtement 50 peut également comprendre un convoyeur 54 qui s'étend au moins en partie à l'intérieur de la cabine 53, à proximité du robot multiaxes 51. Le convoyeur 54 est apte à déplacer un ou plusieurs supports à peindre, par exemple des carrosseries de véhicules automobiles 55. Ainsi, l'installation de revêtement 50 peut être une installation de peinture de carrosseries automobiles.

Le système d'analyse 10 peut être disposé de différentes façons au sein de l'installation de revêtement 50.

Dans le premier mode de réalisation illustré par la figure 4, la source de lumière 11, la première caméra 12a et les éventuelles deuxième et troisième caméras 12b-12c sont disposées à l'extérieur de la cabine 53. Au moins une paroi vitrée 56, appartenant à la cabine 53, les sépare de la zone d'observation 30 (ou zone d'éjection des gouttes, située à l'intérieur de la cabine 53).

Cette disposition est rendue possible par le fait que la source de lumière 11 et les caméras 12a-12c du système d'analyse 10 sont regroupés d'un même côté de la zone d'observation 30. Ainsi, ces éléments électriques/électroniques n'ont pas besoin de respecter la réglementation relative aux atmosphères explosives (ATEX en Europe). Il en découle un système d'analyse 10 moins coûteux et plus facile à installer.

L'ordinateur susceptible de mettre en œuvre l'analyseur d'image 14 est également extérieur à la cabine 53. Il est distinct de l'automate de contrôle de l'installation et en communication avec cet automate. Dans le cas d'un calculateur sur carte électronique, celle-ci peut être embarquée à proximité des caméras. L'ordinateur (ou la carte électronique) peut communiquer avec un ordinateur de supervision de l'installation ou tout autre ordinateur nécessaire au processus de revêtement. Il peut communiquer avec une base de données « dans le nuage » (cloud) de l'usine.

Le fond 13 est en revanche situé à l'intérieur de la cabine 53 (car disposé du côté opposé de la zone d'observation 30).

Le système d'analyse 10 peut comprendre en outre un boîtier 15 dans lequel sont disposées la source de lumière 11 et les caméras 12a-12c. Le boîtier 15 est, dans ce premier mode de réalisation de l'installation de revêtement 50, ouvert sur le côté et placé devant la paroi vitrée 56 de la cabine 53. Il est de préférence fixé à la cabine 53. Après l'installation du boîtier 15 et des caméras 12a-12c, une étape de calibration des caméras 12a-12c peut être accomplie, afin de compenser les déformations dues à la paroi vitrée 56. La carte électronique peut être également installée dans ce boîtier 15.

Dans une variante de ce premier mode de réalisation (non représentée par les figures), la paroi vitrée appartient au boîtier 15 du système d'analyse 10. Le boîtier 15 est disposé dans un ouverture aménagée dans une paroi latérale de la cabine 53. La paroi vitrée peut être située dans le prolongement de la paroi latérale de la cabine 53 ou en position avancée vers l'intérieur de la cabine 53 pour être au plus près de la zone d'observation 30.

Dans le deuxième mode de réalisation illustré par la figure 5, le système d'analyse 10 comprend un caisson 16 muni d'au moins une paroi vitrée 17. Le caisson 16 est disposé à l'intérieur de la cabine 53. La source de lumière 11 et les caméras 12a-12c sont disposées à l'intérieur du caisson 16. Elles sont séparées de la zone d'observation 30 par la paroi vitrée 17. Par « caisson », on entend un boîtier fermé et suffisamment étanche pour pouvoir être pressurisé. Le caisson 16 est raccordé à des moyens de pressurisation, tels qu'une source d'air comprimé. Les moyens de pressurisation peuvent également faire partie de l'installation de revêtement 50. En fonctionnement, le caisson 16 est pressurisé, par exemple avec de l'air provenant de l'extérieur de la cabine 53. Par « pressurisé », en entend que la pression à l'intérieur du caisson 16 est plus élevée que la pression à l'intérieur de la cabine 53. Ainsi, les gaz inflammables de la zone d'atmosphère explosible ne risquent pas de pénétrer dans le caisson 16.

Dans la mesure où la paroi vitrée appartient au boîtier 15 ou au caisson 16, l'étape de calibration des caméras peut être accomplie en usine, préalablement à l'installation du système d'analyse 10.

Dans chacun des modes (et variante) de réalisation décrits ci-dessus, l'intérieur du boîtier 15 ou du caisson 16 est avantageusement noir mat afin d'éviter toute réflexion de lumière qui pourrait nuire à la qualité des images.

L'éclairage et l'observation des gouttes peuvent être réalisés à travers une ou plusieurs parois vitrées, en fonction par exemple des angles d'inclinaison α1, α2, a3 entre la source de lumière 11 et chacune des caméras 12a-12c. Lorsque l'angle d'inclinaison entre la source de lumière 11 et chacune des caméras 12a-12c est faible, typiquement inférieur à 15°, il peut être prévu une unique paroi vitrée (appartenant à la cabine 53, au boîtier 15 ou au caisson 16), commune à la source de lumière 11 et aux caméras 12a-12c. Cette paroi vitrée est avantageusement orientée perpendiculairement à l'axe de propagation de la lumière AP de la source de lumière 11.

A l'inverse, lorsqu'au moins un des angles d'inclinaison α1, α2, α3 est important, typiquement supérieur à 15°, il peut être prévu plusieurs parois vitrées et, au maximum, autant de parois vitrées qu'il y a d'appareils optiques. Plus particulièrement, il peut être prévu une première paroi vitrée orientée perpendiculairement à l'axe de propagation de la lumière AP de la source de lumière 11, une deuxième paroi vitrée orientée perpendiculairement à l'axe optique AO1 de la première caméra 12a (lorsque a1 > 15°), éventuellement une troisième paroi vitrée orientée perpendiculairement à l'axe optique AO2 de la deuxième caméra 12b (lorsque a2 > 15°) et éventuellement une quatrième paroi vitrée orientée perpendiculairement à l'axe optique AO3 de la troisième caméra 12c (lorsque a3 > 15°).

Dans le premier mode de réalisation de l'installation de revêtement (cf. Fig.4) et sa variante, la zone d'observation 30 est située à proximité d'une paroi latérale de la cabine 53. Dans le deuxième mode de réalisation (cf. Fig.5), le système d'analyse 10 peut être placé plus librement.

L'installation de revêtement 50 peut comprendre plusieurs robots multiaxes équipés chacun d'un applicateur 20. Le système d'analyse 10 est alors avantageusement placé de sorte que la zone d'observation 30 soit accessible par au moins deux robots 51 de l'installation.

Toujours en référence aux figures 4 et 5, l'installation de revêtement 50 peut comprendre un dispositif de récupération de peinture 57 disposé sous la zone d'observation 30, à l'aplomb de l'applicateur 20. Le dispositif de récupération de peinture 57 peut être associé à un système de nettoyage. Le dispositif de récupération de peinture 57 et le système de nettoyage éventuellement associé, ainsi que le fond 13, sont avantageusement fixés au caisson/boîtier, de sorte que l'ensemble puisse être monté et testé en usine avant installation.

Le fond 13 du système d'analyse 10 peut être fixe par rapport à la cabine 53. Dans ce cas, si le champ visuel des première et deuxième caméras 12a-12b est suffisamment grand pour englober les deux parties 13a-13b du fond 13 (cf. Figs.1-2), seul l'applicateur 20 est déplacé par le robot 51 lors d'une étape d'analyse de gouttes pour être positionné devant la partie du fond 13 procurant le meilleur contraste. La source de lumière 11 et les caméras 12a, 12b et 12c sont alors fixes par rapport à la cabine 53. La hauteur du champ visuel des caméras est supérieure ou égale à deux fois la distance d'application.

Alternativement, le fond 13 est monté mobile par rapport à la cabine 53, alors que la source de lumière 11 et les caméras 12a-12c sont fixes. Le fond 13 peut être déplacé par le robot 51, un vérin ou un moteur pour positionner la partie du fond 13 la plus appropriée dans le champ visuel des première et deuxième caméras 12a-12b.

Les capteurs d'image des première et deuxième caméras 12a-12b peuvent avoir une définition minimum de 1332x990 pixels. Les caméras 12a-12b présentent avantageusement un champ visuel capable de contenir les gouttes éjectées par l'ensemble des buses 22 d'une rangée. Néanmoins, dans le but de réduire le coût du système d'analyse, il peut être choisi des caméras 12a-12b ayant un champ visuel plus restreint et qui ne couvre qu'une partie seulement des buses 22 d'une rangée.

Si le champ visuel des caméras (qui est notamment fonction du nombre et de la taille des pixels) n'est pas suffisamment grand pour observer l'éjection de toutes les buses 22 d'une rangée simultanément, mais une partie seulement des buses, alors l'applicateur 20 est déplacé par le robot 51 entre l'éjection d'une première partie des buses 22 et l'éjection d'une deuxième partie des buses 22, de sorte que les gouttes éjectées par toutes les buses 22 soient sur une même image. Il est également possible d'acquérir une (ou plusieurs) première(s) image(s) avec l'éjection de la première partie des buses 22 puis, après déplacement de l'applicateur 20, une (ou plusieurs) deuxième(s) image(s) avec l'éjection de la deuxième partie des buses 22.

Alternativement, il est possible de prévoir plusieurs paires de caméras 12a-12b, chaque paire de caméras 12a-12b ayant dans son champ visuel une partie des buses 22.

Dans le cas d'un applicateur 20 comprenant plusieurs rangées de buses 22, l'analyse des gouttes s'effectue avantageusement rangée après rangée.

L'automate de l'installation de revêtement 50 est avantageusement doté de fonctions intelligentes, telles que :
- déterminer les causes de dysfonctionnement de l'applicateur 20, établir un diagnostic et proposer des mesures palliatives ou correctives ;
- anticiper des opérations de maintenance ;
- observer des tendances pour en déduire des alarmes.

Pour mettre en œuvre ces fonctions, l'automate peut recevoir, outre les résultats de l'analyse des gouttes (caractéristiques des gouttes) :
- des informations relatives à la peinture (teinte utilisée, temps d'utilisation depuis le dernier changement de teinte, nombre de supports peints avec cette teinte, température, pression, viscosité de la peinture...) ;
- des informations relatives à l'atmosphère dans la cabine (température, taux d'humidité, vitesse de ventilation) ;
- des informations relatives à la commande (pneumatique ou électrique) de la tête d'impression ;
- des informations relatives à l'applicateur (identifiant de la tête d'impression et de ses composants fluides, températures, temps de fonctionnement de chaque buse de la tête), qui peuvent être enregistrées dans une mémoire de l'applicateur ;
- des informations relatives au robot (identification, paramètres de maintenance, trajectoire notamment) ; et
- des informations relatives au four permettant de sécher les supports après peinture (température, rampes de montée et descente en température).

Ainsi, l'automate est en communication avec les différents éléments de l'installation de revêtement (robot, applicateur, cabine, système de ventilation, four...). Il peut également mettre en œuvre des méthodes d'apprentissage automatique (ex. apprentissage profond) pour apprendre à reconnaître les défauts des gouttes, et plus généralement, les causes de dysfonctionnement de l'applicateur.

Dans un autre mode de réalisation représenté schématiquement par la figure 6, l'installation de revêtement 50 comprend le robot 51 muni de son bras mobile 52, l'applicateur de produit de revêtement 20 monté à une extrémité du bras mobile 52 et un système d'analyse de gouttes 60 fixé au bras mobile 52 du robot 51. Le système d'analyse 60 comprend la source de lumière 11 configurée pour éclairer la zone d'éjection des gouttes 30 (située à l'aplomb de l'applicateur 20) et au moins un dispositif d'acquisition d'image 12d orienté vers la zone d'éjection des gouttes 30. La source de lumière 11 est disposée d'un premier côté de la zone d'éjection des gouttes 30, tandis que le dispositif d'acquisition d'image 12d est disposé d'un deuxième côté opposé de la zone d'éjection des gouttes 30. De préférence, l'axe de propagation de la lumière AP de la source de lumière 11 et l'axe optique AO1 du dispositif d'acquisition d'image 12d sont confondus ou parallèles entre eux.

Ainsi, dans cette configuration dite « embarquée », le système d'analyse de gouttes 60 est monté sur le bras mobile 52 du robot 51 et fonctionne selon le principe de l'ombroscopie. Un fond ou écran n'est pas utile. L'analyse des gouttes peut ainsi être accomplie pendant le processus de revêtement (typiquement pendant un cycle d'application de peinture sur des carrosseries 55 de véhicule automobile).

Le dispositif d'acquisition d'image 12d peut comprendre une unique matrice de pixels, par exemple en forme de barrette, dimensionnée pour observer l'éjection de tout ou partie des buses 22 d'une rangée. Alternativement, le dispositif d'acquisition d'image 12d comprend plusieurs matrices de pixels. Chaque matrice de pixels permet de prendre des images de l'éjection d'une partie seulement des buses 22 d'une rangée. En effet, prévoir plusieurs matrices de pixels de petite taille peut être une solution plus avantageuse économiquement que de prévoir une seule grande matrice de pixels. Les matrices de pixels sont de préférence alignées dans le direction de la rangée de buses 22.

Un avantage de cette configuration embarquée est de pouvoir déterminer la qualité d'éjection des gouttes pendant tout le processus de revêtement.

Selon un développement de ce mode de réalisation, le dispositif d'acquisition d'image 12d comprend autant de matrices de pixels qu'il y a de buses 22 dans une rangée.

L'analyse des gouttes s'effectue grâce à l'analyseur d'image 14, par exemple de la façon décrite en relation avec la figure 3. L'analyseur d'image 14 peut analyser les images provenant des différentes matrices de pixels les unes après les autres (image après image) ou analyser une image reconstituée à partir des images provenant des différentes matrices de pixels. Les images sont de préférence acheminées jusqu'à l'analyseur d'image 14 via le circuit de commande du robot 51. L'analyseur d'image 14 est avantageusement intégré à l'automate du robot 51.

La source de lumière 11 est de préférence un stroboscope synchronisé avec l'éjection des gouttes, comme décrit précédemment.

Le système d'analyse 60 peut comprendre un deuxième dispositif d'acquisition d'image, dont l'axe optique est incliné par rapport à l'axe optique AO1 du dispositif d'acquisition d'image 12d de manière à déterminer la direction des gouttes.

La source de lumière 11 et le(s) dispositif(s) d'acquisition d'image peuvent être contenus dans un boîtier (non représenté), fixé au bras mobile 52 du robot 51 et dont l'intérieur est avantageusement noir mat. Ce boîtier est ouvert sur le bas.

De nombreuses variantes et modifications du système d'analyse de gouttes et de l'installation de revêtement selon l'invention apparaîtront à l'homme du métier.

Plutôt que d'observer et analyser les gouttes pendant leur vol, il est possible d'analyser les gouttes une fois déposées sur le support à revêtir. Ceci permet de vérifier la qualité de l'application en temps réel et décider si des paramètres peuvent être ajustés. Ainsi, le système d'analyse de gouttes peut comprendre une (ou plusieurs) caméra(s) orientée(s) vers le support.

## Revendications

1. Système d'analyse de gouttes (10) susceptibles d'être éjectées par un applicateur de produit de revêtement (20), ledit système comprenant :
- une source de lumière (11) configurée pour éclairer une zone d'éjection des gouttes, dite zone d'observation (30) ;
- un premier dispositif d'acquisition d'image (12a) configuré pour acquérir une image de la zone d'observation (30) ;
- un analyseur d'image (14) configuré pour, à partir de l'image de la zone d'observation (30), déterminer la présence des gouttes à une distance (d) donnée de l'applicateur (20), la taille des gouttes et l'absence de satellite ;
et dans lequel la source de lumière (11) et le premier dispositif d'acquisition d'image (12a) sont situés d'un même côté de la zone d'observation (30).

2. Système (10) selon la revendication 1, comprenant un deuxième dispositif d'acquisition d'image (12b) configuré pour acquérir une image de la zone d'observation (30) et disposé du même côté de la zone d'observation que la source de lumière (11) et le premier dispositif d'acquisition d'image (12a).

3. Système (10) selon la revendication 2, dans lequel les premier et deuxième dispositifs d'acquisition d'image (12a-12b) sont situés de part et d'autre de la source de lumière (11).

4. Système (10) selon l'une quelconque des revendications 1 à 3, dans lequel la source de lumière (11) présente un axe de propagation de la lumière (AP), dans lequel le premier dispositif d'acquisition d'image (12a) présente un premier axe optique (AO1) situé dans un même plan que l'axe de propagation de la lumière (AP), le premier axe optique (AO1) formant avec l'axe de propagation de la lumière (AP) un angle (α1) supérieur ou égal à 0° et inférieur ou égal à 45°.

5. Système (10) selon l'une quelconque des revendications 1 à 4, comprenant en outre un fond (13) situé à l'opposé de la source de lumière (11) par rapport à la zone d'observation (30), le fond comprenant une première partie d'une première teinte (13a) et une deuxième partie d'une deuxième teinte (13b), la première teinte étant plus sombre que la deuxième teinte.

6. Système (10) selon l'une quelconque des revendications 1 à 5, dans lequel le premier dispositif d'acquisition d'image (12a) est configuré pour acquérir des images de la zone d'observation (30) à une fréquence d'acquisition inférieure ou égale à la fréquence d'éjection des gouttes divisée par deux, et de préférence à une fréquence d'acquisition inférieure ou égale à la fréquence d'éjection des gouttes divisée par cinq.

7. Système (10) selon l'une quelconque des revendications 1 à 6, dans lequel le premier dispositif d'acquisition d'image (12a) est commandé par un circuit de commande de l'éjection des gouttes.

8. Système (10) selon l'une quelconque des revendications 1 à 7, dans lequel la source de lumière (11) est un stroboscope et dans lequel la fréquence du stroboscope est égale à *n* fois une fréquence d'acquisition du premier dispositif d'acquisition d'image (12a), avec *n* un entier naturel supérieur ou égal à 2, de préférence supérieur ou égal à 5.

9. Système (10) selon l'une quelconque des revendications 1 à 8, dans lequel l'analyseur d'image (14) est en outre configuré pour, à partir de l'image de la zone d'observation (30), déterminer une ou plusieurs caractéristiques choisies parmi les suivantes : la direction des gouttes, la forme des gouttes, le point de création des gouttes et la vitesse des gouttes.

10. Installation de revêtement (50) comprenant :
- un robot multiaxes (51) comprenant un bras mobile (52) ;
- un applicateur de produit de revêtement (20) monté à une extrémité du bras mobile (52) et comprenant au moins une buse d'éjection de gouttes (22) ; et
- un système d'analyse de gouttes (10) selon l'une quelconque des revendications 1 à 9.

11. Installation selon la revendication 10, comprenant en outre :
- une cabine (53) dans laquelle est disposé le robot multiaxes (51) ;
- au moins une paroi vitrée (17, 56) ;
la source de lumière (11) et le premier dispositif d'acquisition d'image (12a) étant disposés à l'extérieur de la cabine (53) et séparés de la zone d'observation (30) par ladite au moins une paroi vitrée (17, 56).

12. Installation (50) selon la revendication 11, dans laquelle ladite au moins une paroi vitrée (56) appartient à la cabine (53).

13. Installation (50) selon la revendication 11, dans laquelle le système d'analyse de gouttes (10) comprend en outre un boîtier (15), dans laquelle ladite au moins une paroi vitrée appartient au boîtier (15) et dans laquelle le boîtier (15) est disposé dans une ouverture aménagée dans une paroi latérale de la cabine (53).

14. Installation (50) selon la revendication 10, comprenant en outre :
- une cabine (53) dans laquelle est disposé le robot multiaxes (51) ;
- un caisson (16) disposé à l'intérieur de la cabine (53) et muni d'au moins une paroi vitrée (17) ;
la source de lumière (11) et le premier dispositif d'acquisition d'image (12a) étant disposés à l'intérieur du caisson (16) et séparés de la zone d'observation (30) par ladite au moins une paroi vitrée (17).

15. Installation (50) selon l'une quelconque des revendications 10 à 14, dans laquelle le système d'analyse de gouttes (10) comprend en outre un troisième dispositif d'acquisition d'image (12c) orienté vers une face (21) de l'applicateur (20) dans laquelle est aménagée ladite au moins une buse d'éjection de gouttes (22).

16. Installation (50) selon l'une quelconque des revendications 10 à 15, dans laquelle l'applicateur (20) est une tête d'impression de type goutte à la demande.
